Europäisches Patentamt

European Patent Office

Office européen des brevets

(19)

(11) Publication number: **0 136 918**
A2

# (12) EUROPEAN PATENT APPLICATION

(21) Application number: **84306747.1**

(22) Date of filing: **03.10.84**

(51) Int. Cl.⁴: **B 29 C 59/14**
//B29K27/00

(30) Priority: **04.10.83 JP 185521/83**

(43) Date of publication of application:
**10.04.85 Bulletin 85/15**

(84) Designated Contracting States:
**DE FR GB IT NL**

(71) Applicant: **Shin-Etsu Chemical Co., Ltd.**
**6-1, Ohtemachi 2-chome**
**Chiyoda-ku, Tokyo(JP)**

(72) Inventor: **Ueno, Susumu**
**Dogo-shataku 3-308 9809-7, Yatabe**
**Hazaki-cho Kashima-gun Ibaraki-ken(JP)**

(72) Inventor: **Nomura, Hirokazu**
**50-3, Shitte Kamisu-cho**
**Kashima-gun Ibaraki-ken(JP)**

(72) Inventor: **Kuroda, Kouiti**
**Dogo-shataku, 1-103 9809-7, Yatabe**
**Hazaki-cho Kashima-gun Ibaraki-ken(JP)**

(72) Inventor: **Kasahara, Yasuo**
**371-7, Nishiohnuma**
**Fukaya-shi Saitama-ken(JP)**

(74) Representative: **Thomas, Roger Tamlyn et al,**
**D. Young & Co. 10 Staple Inn**
**London WC1V 7RD(GB)**

(54) A sheet material of a vinyl chloride-based resin having improved surface properties.

(57) The invention provides an embossed sheet material of a vinyl chloride-based resin having improved surface properties, e.g. heat resistance, imparted by exposure to an atmosphere of low temperature plasma of an inorganic gas. By virtue of the improved heat resistance on the surface, the sheet material can retain its matt surface condition even when heated in further processing or during use.

EP 0 136 918 A2

A SHEET MATERIAL OF A VINYL CHLORIDE-BASED RESIN

HAVING IMPROVED SURFACE PROPERTIES


BACKGROUND OF THE INVENTION

The present invention relates to a sheet or film of a vinyl chloride-based resin having improved surface properties. More particularly, the invention relates to a sheet or film of a polyvinyl chloride-based resin having an embossed surface which is imparted with improved heat stability by being subjected to a treatment with low temperature plasma on the embossed surface.

Polyvinyl chloride-based resins are advantageous in comparison with other thermoplastic resins when color tone or tones of very high vividness and full of variety are desired by compounding with dyes and pigments. Therefore, they are widely used in various fields of applications as a variety of molded articles or by increasing the commercial value by combining with other materials such as a metal and the like or by providing specific working on the surface of a molded article.

For example, it is widely practiced that a film or sheet of the resin is worked by embossing to be imparted with a three-dimensional appearance with the surface matted by pressing with a metal roll having a desired raised pattern on the surface in a heated and softened condition of the film or sheet.

Such a film or sheet of a polyvinyl chloride-based resin embossed or matted on the surface is, however, not free from the problem of decreased heat resistance in particular. When such a film or sheet is heated, the matted appearance of the surface first disappears to regain the glossy surface even at a relatively low temperature and in the next place the raised pattern obtained by embossing disappears along with further increase of the temperature. Therefore, troubles are sometimes caused when such a matted or embossed sheet is bonded to a metal plate by use of an adhesive under pressure and heating due to the disappearance of the matted surface.

Further, when a composite material composed of such a matted and embossed sheet and another material such as wood, metal and the like is used as a material of walls or furnitures including room heating apparatuses, the matted surface tone is sometimes lost to become less acceptable by local heating with a stove or cooking oven used nearby or by putting a kettle containing hot water thereon although the embossed pattern is relatively safe against such a local heating because the embossed sheet is firmly bonded to the substrate material as a whole.

Various attempts, of course, have been made to solve the above described problems by imparting improved heat resistance to such a matted or embossed sheet of a polyvinyl chloride-based resin. For example, the heat resistance of such a sheet may be improved by formulating the resin compound with an increased amount of an inorganic filler such as calcium carbonate, talc, silica and the like or a polyvinyl chloride-based resin is blended with a polyvinyl chloride-based resin of a different type having a higher melting temperature or other polymers. Such a method is, however, practically disadvangageous because the amount of the inorganic filler to be incorporated should be so large to comply with the usually acceptable gloss of the surface resulting in the decreased workability of the resin compound into films or sheets as well as degraded properties of the shaped films or sheets.

Alternatively, a method is proposed in which the film or sheet of a polyvinyl chloride-based resin is coated on the surface with a coating composition impregnated with an inorganic powder dispersed therein. This method is also disadvantageous because coating with the coating composition can not always be uniform over the whole surface due to the increased consistency of the coating composition accompanying the addition of the inorganic powder thereto in addition to the problems including settling of the inorganic powder in the coating composition and changes in the surface luster as a result of the increased volume of added solvent or evaporation thereof.

Furthermore, attempts have been made to emboss the sheet at a high temperature but, in this case, the high temperature working of the sheet or film unavoidably causes shrinkage in the web width of the film or sheet to increase the difficulty in the working. In addition, the productivity of the film or sheet web is necessarily decreased because the film or sheet before the embossing work must be sufficiently heated.

## SUMMARY OF THE INVENTION

It is therefore an object of the present invention to provide an embossed or matted film or sheet of a polyvinyl chloride-based resin with increased heat resistance to be freed from the above described problems and disadvantages in the prior art methods.

Thus, the film or sheet of the present invention developed as a result of the extensive investigations undertaken by the inventors is a film or sheet of a polyvinyl chloride-based resin having an embossed surface, the surface having been subjected to a surface treatment by the exposure to a low temperature plasma of an inorganic gas.

The above described film or sheet of the present invention is imparted with remarkably improved heat resistance without any adverse influences on the appearance in color and other respects and the properties inherent to polyvinyl chloride-based resins such as heat-bondability and mechanical strengths so that the above described problem of disappearance of the matted or embossed surface by heating can reliably be solved.

DETAILED DESCRIPTION OF THE PREFERRED EMBODIMENTS

The polyvinyl chloride-based resin as the material for the inventive film or sheet includes both of the homopolymeric polyvinyl choloride resins and copolymers mainly composed of vinyl chloride. The copolymer is obtained by the copolymerization of vinyl chloride with one or more of comonomers such as vinyl esters, vinyl ethers, acrylic and methacrylic acids and esters thereof, maleic and fumaric acids and esters thereof as well as maleic anhydride, aromatic vinyl compounds, vinylidene halides, acrylonitrile and methacrylonitrile, olefins such as ethylene and propylene and the like.

Films or sheets of a polyvinyl chloride-based resin are usually shaped by admixing the resin with a plasticizer in order to adequately control the rigidity or flexibility of the film or sheet shaped thereof. Various kinds of plasticizers are known and practically used including phthalic acid esters such as dioctyl phthalate, dibutyl phthalate, butyl benzyl phthalate and the like, esters of aliphatic dibasic acids such as dioctyl adipate, dibutyl sebacate and the like, esters of pentaerithritol, glycol esters such as diethyleneglycol benzoate and the like, fatty acid esters such as methyl acetylricinolate and the like, esters of phosphoric acid such as tricresyl phosphate, triphenyl phosphate and the like, epoxidated vegetable oils such as epoxidated soybean oil, epoxidated linseed oil and the like, esters of citric acid such as acetyl tributyl citrate, acetyl trioctyl citrate and the like and other polyester-type plasticizers such as trialkyl trimellitates, tetra-n-octyl pyromellitate, polypropylene adipate and the like.

Though not particularly limitative, it is preferable that the plasticizers is an aromatic one because the effect of formation of a crosslinked layer on the surface is more remarkable when a film of the polyvinyl chloride-based resin plasticized with an aromatic plasticizer is subjected to the low temperature plasma treatment than those plasticized with other types of plasticizers. It is of course not necessary that the plasticizers formulated with the resin should be limited to the aromatic ones alone but substantially the same improved effect can be obtained by use of a combination of plasticizers of which the proportion of the aromatic plasticizers is 25% by weight or more. The overall amount of the plasticizer or plasticizers should be usually in the range from 5 to 100 PHR or, preferably, from 15 to 50 PHR in order to obtain adequately controlled rigidity or flexibility of the sheet or film.

With an object to improve the lubricity, stability and other properties, the polyvinyl chloride-based resin may be admixed with various kinds of additives according to need including metal salts of carboxylic acids such as calcium stearate, zinc stearate, lead stearate, barium stearate, cadmium stearate and the like, tribasic lead sulfate, dibasic lead phosphite, organic tin compounds such as dibutyltin dilaurate, di-n-octyltin maleate and the like, esters of organic acids such as butyl stearate and the like, fatty acid amides such as ethylene bisstearoamide and the like, higher fatty acids and esters thereof and rice waxes. It is of course optional that other types of additives conventionally used in the processing of polyvinyl chloride-based resins are used including fillers, heat resistance improvers, antioxidants, ultraviolet absorbers, antistatic agents, antifogging agents, pigments, dyes, crosslinking aids and others.

Further, the resin compound may be formulated with various kinds of polymeric rubbery elastomers exemplified by copolymers of ethylene and vinyl acetate, copolymers of acrylonitrile and butadiene, copolymers of styrene and acrylonitrile, copolymers of methyl methacrylate, styrene and butadiene, urethane elastomers, polyamide resins, terpolymers of ethylene, propylene and a dienic monomer, epoxy-modified polybutadiene resins and the like.

The resin compound prepared by blending the polyvinyl chloride-based resin with plasticizers and other necessary additives can be shaped into a film or sheet by a method of shaping conventionally undertaken in the art such as extrusion molding, injection molding, calendering, inflation, compression molding and the like without particular limitations.

The thus shaped film or sheet is then subjected to embossing to be imparted with mat or sandy surface or wood grain-like or leathery surface pattern. The process of embossing is conventional and can be performed by pressing a metal roll having a carved surface of the desired pattern is pressed to the resin film or sheet having been softened in advance with heating to effect simultaneous cooling of the film or sheet. Alternatively, an embossing roll or plate heated at a suitable temperature is pressed to the resin film or sheet to effect embossing thereof followed by cooling.

In the present invention, the thus embossed film or sheet of the resin composition is then subjected to exposure to an atmosphere of low temperature plasma of an inorganic gas. Such a treatment can be performed by placing the embossed film or sheet in a chamber for low temperature plasma generation equipped with discharge electrodes inside and generating low temperature plasma within the chamber under a reduced pressure by continuously introcuding the inorganic gas with impression of a discharge voltage between the electrodes to cause glow discharge.

The inorganic gas for supporting the low temperature plasma is exemplified by helium, neon, argon, nitrogen, oxygen, air, nitrous oxide, nitrogen monoxide, nitrogen dioxide, carbon monoxide, carbon dioxide, bromine cyanide, sulfur dioxide, hydrogen sulfide and the like. These gases may be used either singly or as a mixture of two kinds or more. Among the above named inorganic gases, argon and carbon monoxide are particularly preferred in the present invention.

The pressure in the plasma chamber should be in the range from 0.001 to 10 Torr or, preferably, from 0.05 to 5 Torr in order to obtain stable glow discharge by supplying a high frequency power of several tens of watts to several hundreds of kilowatts at a frequency of a few kHz to 100 MHz between the electrodes. The frequency band of the electric power is not limited to the above mentioned high frequency range but can be direct current, low frequency or microwave.

The apparatus for the generation of low temperature plasma is not limited to the above mentioned interior electrode-type but may be of exterior electrode-type or of a single work coil-type. The electrodes are connected to the high frequency generator either by capcitive coupling or by

- 10 -  **0136918**

inductive coupling. The shape of the electrodes is also not particularly limitative and the power electrode and the grounded electrode may have the same form or different forms from each other including plates, rings, rods, cylinders and the like. Further, it is sometimes convenient that the inner walls of the plasma chamber are made of a metal to serve as one of the electrodes which is usually grounded.

It is essential at any rate that the surface of the film or sheet under the plasma treatment is kept safe from denaturation by the heat of electric discharge. The length of time for the low temperature plasma treatment is usually from a few seconds to several tens of minutes though dependent on various parameters including the type of the apparatus, voltage impressed to the electrodes and others.

The embossed film or sheet of the polyvinyl chloride-based resin is imparted with remarkably improved heat resistance by the above described treatment with low temperature plasma of an inorganic gas so that the matted surface thereof is retained without increaseing the gloss even in the heat treatment for bonding to a substrate of a metal, synthetic resin or other materials consequently resulting in a sufficiently high adhesive bonding strength therebetween. Further, the embossed film or sheet imparted with improved heat resistance on the surface is prevented from the change in the surface gloss even in local heating by a hot body placed nearby or in contact therewith. In addition to the above described improvement in the heat resistance, the low temperature plasma treatment of the embossed film or sheet of the polyvinyl chloride-based resin is also effective in improving other surface properties such as resistance against organic solvents, insusceptibility to stain and the like.

In the following, examples are given to illustrate the present invention in more detail.

Example 1.

A film of 0.2 mm thickness was prepared by calendering of a resin compound composed of 100 parts by weight of a homopolymeric polyvinyl chloride resin, 20 parts by weight of dioctyl phthalate as a plasticizer, 5 parts by weight of an epoxidated soybean oil and 3 parts by weight of a calcium/barium-containing stabilizer.

The film was heated by contacting with a roll heated at 150 °C and then embossed into a surface with sandy appearance by use of an embossing roll at 60 °C having a sandy carved surface in a 120 mesh fineness and 30 $\mu$m depth.

The thus embossed film was placed in a plasma chamber of an apparatus for low temperature plasma generation and low temperature plasma was generated inside the chamber by the impression of a high frequency electric power of 400 watts at a frequency of 13.56 MHz while the atmosphere inside the chamber was kept at a pressure of 0.05 Torr with continuous introduction and discharge of argon gas after evacuation of the chamber to a pressure of 0.01 Torr. The low temperature plasma treatment of the film in this manner was continued for 5 minutes.

The embossed film after the above described low temperature plasma treatment was dipped in glycerin for 30 seconds at the temperature indicated in Table 1 below followed by the determination of the surface luster and the depth of the sandy recess on the surface in $\mu$m to give the results shown in Table 1. The table also includes the results obtained with the same embossed film after dipping in glycerin but without the low temperature plasma treatment for comparative purpose. The surface luster was determined according to the procedure specified in JIS K 5400 and the depth of the sandy recess was determined by use of a surface roughness meter manufactured by Kosaka Kenkyusho.

Table 1

| Dipping in glycering at | Surface luster | | Depth, m | |
|---|---|---|---|---|
| | Plasma treatment | | Plasma treatment | |
| | Yes | No | Yes | No |
| (Before dipping) | 30 | 30 | 30 | 30 |
| 140 °C | 30 | 51 | 22 | 18 |
| 160 °C | 29 | 73 | 18 | 6 |
| 180 °C | 28 | 96 | 15 | 2 |

Example 2.

A film of 0.15 mm thickness was prepared by calendering of a resin compound composed of 100 parts by weight of a polyvinyl chloride-based resin, 300 parts by weight of dioctyl phthalate as a plasticizer, 5 parts by weight of an epoxidated soybean oil, 4 parts by weight of a barium/zinc-containing stabilizer and 5 parts by weight of red oxide of iron.

After contacting with the surface of a roll kept at 160 °C, the film was subjected to embossing in a wood grain-like pattern by use of an embossing roll kept at 80 °C of which the depths of the trachea portions and the flat portions were $80 \mu$m and $5 \mu$m, respectively.

The thus embossed film was placed in a plasma chamber of an apparatus for low temperature plasma generation and low temperature plasma was generated inside the chamber by the impression of a high frequency electric power of 2 kilowatts at a frequency of 110 kHz while the atmosphere inside the chamber was kept at a pressure of 0.2 Torr with continuous introduction and discharge of carbon monoxide gas after evacuation of the chamber to a pressure of 0.001 Torr. The low temperature plasma treatment of the embossed film in this manner was continued for 1 minute.

Then, the plasma-treated film was applied to and laminated with a zinc-plated steel plate of 0.3 mm thickness coated with an acrylic adhesive and heated at 200 ºC to form a composite sheet material.

The thus prepared laminated composite sheet was heated for 1 minute at 100 ºC, 120 ºC or 140 ºC and the surface luster of the embossed surface was determined before and after heating according to the procedure specified in JIS K 5400 to give the results shown in Table 2 below which also includes the results obtained without the plasma treatment.

- 15 -                              0136918

T a b l e   2

| Plasma treat-ment | Without heating | After heating at | | |
|---|---|---|---|---|
| | | 100 $^{\circ}$C | 120 $^{\circ}$C | 140 $^{\circ}$C |
| Yes | 25 | 23 | 22 | 22 |
| No | 45 | 50 | 55 | 70 |

Example 3.

A sheet of 1 mm thickness was prepared by the T-die method of a resin compound composed of 100 parts by weight of a polyvinyl chloride resin, 3 parts by weight of dibutyltin maleate, 1 part by weight of dibutyltin laurate, 0.5 part by weight of stearic acid and 5 parts by weight of carbon black and the sheet extruded out of the T-die was immediately embossed into a leathery grain pattern by use of an embossing roll having a pattern depth of $60 \mu m$ and heated at 120 $^{\circ}$C.

The thus embossed resin sheet was then subjected to the low temperature plasma treatment for 1 minute under the same conditions as in Example 2 except that the plasma-supporting gas was a mixture of argon and carbon monoxide gases in equal volumes instead of pure carbon monoxide.

The plasma-treated sheet was adhesively bonded to a particle-board of 2.5 mm thickness by use of an epoxy adhesive which was completely cured by standing for 48 hours at room temperature. After complete curing of the epoxy adhesive, hot air at a temperature indicated in Table 3 below was blown at the surface of the embossed resin sheet and the luster of the thus heated surface was determined according to the procedure specified in JIS K 5400 to give the results shown in Table 3 which also includes the results obtained without the plasma treatment for comparison.

T a b l e   3

| Plasma treatment | Without heating | After heating with air blow at | | | |
|---|---|---|---|---|---|
| | | 60 ºC | 80 ºC | 100 ºC | 120 ºC |
| Yes | 15 | 15 | 15 | 14 | 14 |
| No | 15 | 18 | 26 | 38 | 45 |

CLAIMS

1. A method of treating an embossed sheet material of a vinyl chloride-based resin to improve its surface properties, which comprises exposing the embossed sheet material to an atmosphere of low temperature plasma of an inorganic gas.

2 The method as claimed in claim 1 wherein the inorganic gas is argon or carbon monoxide.

3. The method of claim 1 or 2, wherein the sheet material has been embossed to give a matt finish.